**Europäisches Patentamt**

**European Patent Office**

**Office européen des brevets**

(19)

(11)　**EP 1 336 623 B1**

(12)　　**EUROPÄISCHE PATENTSCHRIFT**

(45) Veröffentlichungstag und Bekanntmachung des Hinweises auf die Patenterteilung:
**25.08.2004　Patentblatt 2004/35**

(51) Int Cl.⁷: **C08F 2/44**, C08J 3/12, C09D 5/03, C08J 5/04

(21) Anmeldenummer: **03002092.9**

(22) Anmeldetag: **30.01.2003**

(54) **Pulverförmige Bindemittelzusammensetzung**

Binder composition in powder form

Composition de liant particulaire

(84) Benannte Vertragsstaaten:
**AT BE BG CH CY CZ DE DK EE ES FI FR GB GR HU IE IT LI LU MC NL PT SE SI SK TR**

(30) Priorität: **14.02.2002　DE 10206126**

(43) Veröffentlichungstag der Anmeldung:
**20.08.2003　Patentblatt 2003/34**

(73) Patentinhaber: **Wacker Polymer Systems GmbH & Co. KG**
**84489 Burghausen (DE)**

(72) Erfinder:
• **Weiler, Peter, Dr.**
**82538 Geretsried (DE)**
• **Dietrich, Ulf, Dr.**
**84489 Burghausen (DE)**
• **Gräwe, Renè**
**84137 Vilsbiburg (DE)**

(74) Vertreter: **Schuderer, Michael, Dr. et al**
**Wacker-Chemie GmbH**
**Zentralabteilung Patente**
**Marken und Lizenzen**
**Hanns-Seidel-Platz 4**
**81737 München (DE)**

(56) Entgegenhaltungen:
**EP-A- 0 314 447**　　　　**EP-A- 0 522 648**
**EP-A- 0 551 064**

EP 1 336 623 B1

**Beschreibung**

Die Erfindung betrifft eine pulverförmige Bindemittelzusammensetzung zur Bindung von partikulären Materialien, insbesondere Fasern.

Es ist bekannt zur Herstellung von Faserformkörpern vernetzbare Polymerpulver einzusetzen. In der EP-A 894888 wird dazu eine Pulvermischung empfohlen, welche ein carboxylfunktionelles Mischpolymerisat enthält und eine pulverförmige Verbindung, welche zwei oder mehr vernetzende Epoxid- oder Isocyanatgruppen enthält. Aus der EP-A 1136516 ist bekannt, zur Faserbindung Polymerpulver mit einem carboxylfunktionellen Mischpolymerisat und einem weiteren Mischpolymerisat einzusetzen, welches funktionelle Gruppen enthält, welche mit Carboxylgruppen kovalente Bindungen eingehen. Derartige vernetzbare Pulverbinder zeigen bei der Faserbindung unter Umständen eine nicht voll befriedigende Verteilung im Faservlies oder Haftung an den Fasern.

In der EP-B 257567 wird ein Verfahren zur Herstellung von hochmolekularen Emulsionspolymerisaten beschrieben, welche insbesondere für Coatinganwendungen geeignet sind. Dabei erfolgt die Copolymerisation in Gegenwart eines niedermolekularen Polymerisats, welches in Wasser oder Alkali löslich oder dispergierbar ist. Durch diese Massnahme werden unter anderem Newtonsche Fliesseigenschaften und bessere Benetzungseigenschaften erreicht.

Die US-A 5314943 beschreibt ein vernetzbares, formaldehydfreies Faserbindemittel, welches aus einer Mischung eines Emulsionspolymerisats und eines Lösungspolymerisats mit hohem Anteil an Carboxylgruppen besteht. Um eine gute Benetzung der Faser mit dem Bindemittel zu erhalten, wird der Anteil des niedermolekularen Lösungspolymerisats niedrig gehalten.

Es bestand die Aufgabe, pulverförmige Bindemittel zur Verfügung zu stellen, welche bei deren Applikation eine verbesserte Verteilung in dem zu bindenden Material und eine verbesserte Haftung an den zu bindenden partikulären Materialien zeigen.

Überraschenderweise wurde gefunden, dass durch Zusätze, welche die Schmelzviskosität der Bindemittel herabsetzen, Bindemittelzusammensetzungen erhalten werden, deren Anwendung zu Formkörpern mit höherer Festigkeit führt.

Gegenstand der Erfindung ist eine pulverförmige Bindemittelzusammensetzung zur Bindung von partikulären Materialien enthaltend

A) 10 bis 99.99 Gewichtsteile mindestens eines pulverförmigen Mischpolymerisats, mit einer Glasübergangstemperatur Tg oder einer Schmelztemperatur von ≥ 30°C, aus einem oder mehreren Comonomeren a1) aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht der Comonomere, eines oder mehrerer ethylenisch ungesättigter funktioneller Comonomere a2), und

B) 0 bis 89.99 Gewichtsteile mindestens einer pulverförmigen Verbindung, welche mindestens zwei funktionelle Gruppen tragen, welche mit den funktionellen Gruppen des Mischpolymerisats A) eine kovalente Bindung eingehen können,

dadurch gekennzeichnet, dass

C) 0.01 bis 90 Gewichtsteile mindestens eines Additivs aus der Gruppe umfassend Polyester, Polyamide, Polyether, Polyolefine, Polyvinylalkohole, Polyvinylester, Polyvinylacetale, Fettalkohole und deren Ester, Fettsäuren sowie deren Ester und Amide und Metallseifen, Montansäuren sowie deren Ester und Seifen, Paraffine, jeweils mit einer Glasübergangstemperatur Tg oder einer Schmelztemperatur von ≤ 150°C, enthalten sind, wobei sich die Angaben in Gewichtsteilen auf 100 Gewichtsteile aufaddieren.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9$^R$ oder VeoVa10$^R$ (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide wird üblicherweise Vinylchlorid eingesetzt.

Geeignete ethylenisch ungesättigte funktionelle Comonomere a2) sind solche mit einer oder mehreren funktionellen Gruppen aus der Reihe umfassend Carboxylgruppe, Hydroxygruppe, Aminogruppe, Amidogruppe insbesondere N-Alkylolamidgruppen und sich davon ableitende Gruppen, Carbonylgruppe, Alkoxysilangruppe, Epoxidgruppe, Isocyanatgruppe, Oxazolingruppe, Aziridingruppe, sowie Kombinationen der genannten funktionellen Comonomere.

Beispiele für carboxylfunktionelle Comonomere sind Acrylsäure, Methacrylsäure, Maleinsäure, Fumarsäure, Crotonsäure und Itaconsäure, die Halbester der Malein- und Fumarsäure, Monovinylbernsteinsäureester, Methylenmalonsäure.

Geeignete hydroxyfunktionelle Comonomere sind beispielsweise-Hydroxyalkyl(meth)acrylate wie Hydroxyethyl(meth)acrylat, Hydroxypropyl(meth)acrylat und Hydroxybutyl(meth)acrylat. Beispiele für Comonomere mit Amingruppen sind Allylamin und (Meth)acrylsäure-2-aminoethylester.

Amidofunktionelle Comonomere sind beispielsweise Acrylamid, Methacrylamid, N-Methylolacrylamid und N-Methylolmethacrylamid und deren Alkylether wie Isobutoxyether oder n-Butoxyether, Acrylamidoglykolsäure, Methacrylamidoglykolsäuremethylester, N-Methylolallylcarbamat.

Beispiele für Carbonylhaltige Comonomere sind Vinyl- oder Allylacetoacetat, Vinyl- oder Allylbisacetoacetat, Acrolein, Allylbernsteinsäureanhydrid und Maleinsäureanhydrid.

Geeignete Alkoxysilan-funktionelle Comonomere sind Acryloxypropyltri(alkoxy)-Silane, Methacryloxypropyltri(alkoxy)-Silane, Vinyltrialkoxysilane und Vinylmethyldialkoxysilane, beispielsweise Vinyltriethoxysilan und gamma-Methacryloxypropyltriethoxysilan.

Epoxidgruppenhaltige Comonomere sind beispielsweise Glycidylacrylat, Glycidylmethacrylat, Glycidylvinylether und Glycidylallylether.

Geeignete Isocyanat-Monomere sind meta- und para-Isopropenylalpha,alpha-dimethyl-benzyl-Isocyanat (TMI), 2-Methyl-2-isocyanatopropylmethacrylat, wobei die Isocyanatgruppen der genannten Monomere gegebenenfalls auch blokkiert sein können.

Bevorzugt werden die nachfolgend genannten Mischpolymerisate A), welche noch die entsprechenden Anteile an Comonomerkomponente a2) aufweisen. Die Angaben in Gew.-% addieren sich mit dem Anteil an funktionellen Comonomereinheiten a2) jeweils auf 100 Gew.-%.

Vinylacetat-Polymerisate;

Vinylester-Ethylen-Copolymere, wie Vinylacetat-Ethylen-Copolymere;

Vinylester-Ethylen-Vinylchlorid-Copolymere, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9$^R$, VeoVa10$^R$), enthalten sind;

Vinylacetat-Copolymere mit einem oder mehreren copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9$^R$, VeoVa10$^R$), welche gegebenenfalls noch Ethylen enthalten;

Vinylester-Acrylsäureester-Copolymerisate insbesondere mit Vinylacetat, und Butylacrylat und/oder 2-Ethylhexylacrylat, welche gegebenenfalls noch Ethylen enthalten;

Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten. Besonders bevorzugt sind dabei (Meth)acrylsäure- und Styrol-Polymerisate:

Copolymerisate mit n-Butylacrylat und/oder 2-Ethylhexylacrylat;

Copolymerisate von Methylmethacrylat mit Butylacrylat und/ oder 2-Ethylhexylacrylat, und/oder 1,3-Butadien;

Styrol-1,3-Butadien-Copolymere und Styrol-(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso-, tert-Butylacrylat eingesetzt werden kann.

Vorzugsweise werden die Comonomere in den oben angegebenen Copolymerisaten in einem solchen Verhältnis copolymerisiert, dass das Mischpolymerisat A) einen Schmelzpunkt oder eine Glasübergangstemperatur Tg von ≥ 45°C aufweist.

Als funktionelle Comonomere a2) bevorzugt werden die carboxylfunktionellen Comonomere, die hydroxyfunktionellen Comonomere, N-Methylol(meth)acrylamid und dessen Ether, epoxidfunktionelle Comonomere. Bevorzugt werden auch Kombinationen von hydroxyund epoxidfunktionellen Comonomeren. Diese Comonomere sind vorzugsweise in einer Menge von 1 bis 20 Gew.-%, bezogen auf das Gesamtgewicht der Comonomere a), enthalten.

Die Auswahl der vernetzend wirkenden Komponente B) hängt von der Funktionalität der Komponente A) ab. Es werden solche Verbindungen B) eingesetzt, deren funktionelle Gruppen mit den funktionellen Gruppen der Komponente A) über Additionsreaktionen oder Kondensationsreaktionen kovalente Bindungen eingehen.

Als Vernetzer B) geeignet sind pulverförmige Verbindungen, welche zwei oder mehr Epoxid- oder Isocyanatgruppen aufweisen, mit einem Schmelzpunkt von 40°C bis 150°C. Der Gehalt an diesen Vernetzern beträgt vorzugsweise von 0.1 bis 50 Gewichtsteile.

Derartige Epoxidverbindungen können mit carboxylfunktionellen Mischpolymerisaten A) verestern, mit hydroxyfunktionellen Mischpolymerisaten A) verethern oder mit aminofunktionellen Mischpolymerisaten A) reagieren. Beispiele für geeignete Epoxidvernetzer sind solche vom Bisphenol-A-Typ, das heißt Kondensationsprodukte von Bisphenol-A und Epichlorhydrin oder Methylepichlorhydrin. Diese Epoxidvernetzer sind im Handel, beispielsweise unter den Handelsnamen Epikote oder Eurepox, erhältlich. Geeignet ist auch Triglycidylisocyanurat.

Isocyanatgruppen enthaltende Verbindungen können mit carboxylfunktionellen Mischpolymerisaten A), mit aminofunktionellen Mischpolymerisaten A) oder mit hydroxyfunktionellen Mischpolymerisaten A) reagieren. Geeignete Diisocyanate sind ebenfalls gängige Handelsprodukte, beispielsweise m-Tetramethylxylen-Diisocyanat (TMXDI), Methylendiphenyl-Diisocyanat (MDI).

Geeignete Vernetzer B) sind auch Mischpolymerisate, welche bezüglich der Basismonomere dieselbe Zusammensetzung wie die Mischpolymerisate A) haben können, das heißt Mischpolymerisate B) von einem oder mehreren Monomeren b1) aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide. Als funktionelle Gruppen b2), welche mit den funktionellen Gruppen des Mischpolymerisats A) eine kovalente Bindung eingehen können, kommen dieselben in Frage, welche bereits als Comonomere a2) genannt worden sind, in den selben obengenannten Mengen. Die Auswahl erfolgt dabei so, dass die funktionellen Comonomereinheiten b2) des Mischpolymerisats B) mit den funktionellen Comonomereinheiten a2) des Mischpolymerisats A) über Additions- oder Kondensationsreaktion kovalente Bindungen ausbilden. Bevorzugte Kombinationen sind Carboxylfunktionelle Mischpolymerisate A) mit Mischpolymerisaten B), welche Epoxid-, Hydroxy-, Amin- oder Isocyanatfunktionelle Comonomereinheiten enthalten; sowie Hydroxy-funktionelle Mischpolymerisate A) mit Mischpolymerisaten B), welche Epoxid-, Alkoxysilan-, N-Methylol- oder Isocyanat-funktionelle Comonomereinheiten enthalten; sowie Amin-funktionelle Mischpolymerisate A) mit Mischpolymerisaten B), welche Epoxid-, Alkoxysilan-, Carboxyl- oder Isocyanat-funktionelle Comonomereinheiten enthalten.

Wenn Kombinationen aus den Mischpolymerisaten A) und B) eingesetzt werden, liegen die Mischpolymerisate A) und B) vorzugsweise in einem solchen Verhältnis vor, dass das molare Verhältnis an funktionellen Comonomereinheiten von Copolymer A) zu Copolymer B) von 5 : 1 bis 1 : 5 variiert. Für die Polymerzusammensetzung werden die Copolymeren A) und B) so ausgewählt, dass sie miteinander verträglich sind, das heißt auf molekularer Ebene miteinander mischbar sind. Üblicherweise geht man daher so vor, dass die in der Polymerzusammensetzung vorliegenden Copolymere A) und B), abgesehen von den funktionellen Comonomereinheiten, größtenteils aus denselben Comonomereinheiten aufgebaut sind.

Am meisten bevorzugt werden Zusammensetzungen mit carboxylfunktionellen Styrol-(Meth)acrylsäureester-Copolymerisaten, insbesondere Styrol-Butylacrylat- und/oder Styrol-Methylmethacrylat-Butylacrylat-Copolymere mit Acrylsäureeinheiten, oder mit carboxylfunktionellen Vinylester-Copolymerisaten, insbesondere Vinylacetat- oder Vinylacetat-Ethylen-Copolymerisate mit Crotonsäure oder Acrylsäure-Einheiten als Mischpolymerisat A); und mit glycidylmethacrylathaltigem Styrol-(Meth)acrylsäureester-Copolymerisaten, insbesondere Styrol-Butylacrylatund/oder Styrol-Methylmethacrylat-Butylacrylat-Copolymeren, oder epoxidfunktionellen Vinylester-Copolymerisaten, insbesondere allylglycidyletherhaltige Vinylacetat- oder Vinylacetat-Ethylen-Copolymerisate, als Mischpolymerisat B).

Die Herstellung der Mischpolymerisate A) und B) kann mittels bekannter radikalisch initiierter Polymerisationsverfahren erfolgen, beispielsweise mittels Lösungspolymerisation oder wässriger Suspensionspolymerisation oder wässriger Emulsionspolymerisation. Bevorzugt sind Suspensions- und Emulsionspolymerisation. Zur Trocknung der Lösungen beziehungsweise Dispersionen können alle gängigen Trocknungsverfahren angewendet werden: Sprühtrocknung, Walzentrocknung, Gefriertrocknung, Bandtrocknung, Koagulation mit anschließender Wirbelschichttrocknung. Bevorzugt werden Sprühtrocknungs- und Walzentrocknungsverfahren angewendet. Derartige Verfahren sind zum Beispiel in der EP-B 1046737 beschrieben.

Als Komponente C) besonders geeignet sind solche, welche in den Monomeren a1), gegebenenfalls b1), oder deren Gemischen löslich sind, das heißt solche mit einer Löslichkeit bei 20°C von mehr als 10 Gew.-%, bezogen auf die Menge an Monomer a1) und gegebenenfalls b1). Wenn die Komponente C) diese Anforderung erfüllt erhält man wasserklare Schmelzen (gleicher Brechungsindex) der pulverförmigen Bindemittelzusammensetzung. Für den Fall, dass die Komponente C) nicht in den Monomeren a1) bzw. b1) löslich ist, sollte sie vorzugsweise so ausgewählt werden, dass sie in Form einer wässrigen Dispersion mit den Dispersionen der Mischpolymerisate A) bzw. B) mischbar ist. Mit diesen bevorzugten Merkmalen wird eine homogene Zumischung und somit eine bessere Effizienz bei der Reduktion der Schmelzviskosität erhalten.

Die Auswahl der Komponente C) hängt auch von der Zusammensetzung des Mischpolymerisats A) ab. Für Vinylester-Polymerisate werden Polyvinylalkohole, Polyvinylester, Polyvinylacetale und Fettsäureester bevorzugt. Für (Meth)acrylsäureester-Polymerisate werden Polyester und Fettsäureester bevorzugt. Für Butadien-haltige Polymerisate sind Polyester, Polyolefine, Polyvinylalkohole, Polyvinylester, Polyvinylacetale und Fettsäureester bevorzugt. Für Styrol-Copolymerisate mit (Meth)acrylsäureestern setzt man vorzugsweise Polyester, Polyvinylalkohole, Polyvinylester, Polyvinylacetale und Fettsäureester ein.

Als Komponente C) bevorzugte Polyester sind die Veresterungsprodukte von di- oder trifunktionellen aliphatischen oder cycloaliphatischen Alkoholen wie Ethylenglykol, Diethylenglykol, Butylenglykol, Cyclohexandimethanol und Hexantriol mit einer zweibasischen Carbonsäure wie Adipinsäure, Phthalsäure und Terephthalsäure bzw. deren Anhydriden, jeweils mit einem Mw von 2000 bis 300000.

Bevorzugte Polyamide sind (Polytetramethylenadipinsäureamid, PA 4.6), (Polycaprolactam, PA 6), (Polyhexamethylenadipinamid, PA 6.6), (Polyhexamethylensebacinsäureamid, PA 6.10), (Polyaminoundecansäure, PA 11) und (Polylaurinlactam, PA 12). Bevorzugte Polyether sind Polyalkylenglykole aus Ethylenoxid (EO) oder Propylenoxid (PO) sowie EO-PO-Mischpolymerisate. Bevorzugte Polyolefine sind polare und unpolare Polyethylenwachse, Polypropylen und Polyisopren.

Bevorzugte Polyvinylalkohole sind Polyvinylalkohole und Ethylen-Vinylalkohol-Copolymerisate mit einem Hydrolysegrad von 20 bis 100 Mol-% und einem Mw von 3000 bis 500000.

Bevorzugte Polyvinylester sind Polyvinylacetat und Ethylen-Vinylacetat-Copolymere mit einem Mw von 5000 bis 3000000. Bevorzugte Polyvinylacetale sind Polyvinylacetacetal und Polyvinylbutyral und einem Mw von 10000 bis 500000.

Geeignete Fettalkohole sind Cetylalkohol und Stearylalkohol. Geeignete Fettsäuren sind Stearinsäure und 12-Hydroxystearinsäure. Beispiele für Fettsäureester sind hydriertes Ricinusöl, Glycerinmonostearat, Glycerintristearat, sowie Fettsäurekomplexester wie Stearinsäureester und Ölsäureester, oder Fettalkohol-Fettsäureester wie Cetylpalmitat und Cetylstearat. Als Fettsäureamide sei Ölsäureamid genannt. Geeignete Metallseifen sind die Stearate von Calcium oder Zink. Beispiele für Montansäuren sowie deren Ester und Seifen sind Montansäure, Montansäureglycerinester. Bevorzugt werden Fettsäureester wie hydriertes Ricinusöl, beispielsweise in Form von HCO-Flocken ("Hydrogenated Castor Oil").

Am meisten bevorzugt werden die genannten Polyester und Fettsäureester. Die als Komponente C) genannten Polymere und Verbindungen sind im Handel erhältlich, und mit dem Fachmann bekannten Verfahren herstellbar.

Die Komponente C) wird in einer Menge von 0.01 bis 60 Gewichtsteilen eingesetzt. Die Einsatzmenge hängt ab von dem rheologischen Fließverhalten der Bestandteile A) und b) der pulverförmigen Zusammensetzung, und von den Verarbeitungsbedingungen, mit denen die Pulverzusammensetzung hergestellt wird. Die Komponente C) wird in einer solchen Menge in der Bindemittelzusammensetzung eingesetzt, dass die Schmelzviskosität der flüssigen Mischung $\leq 5 \cdot 10^4$ Pas bei 150°C beträgt.

Die Komponente C) kann als Pulver mit der Komponente A), und gegebenenfalls der Komponente B), abgemischt werden. Die Komponente C) kann auch während der Polymerisation der Mischpolymerisate A) oder gegebenenfalls B), zugegeben werden. Wie oben erwähnt sollte die Komponente C) in diesem Fall in den Monomeren a1) bzw. b1) löslich sein, oder in Form einer wässrigen Dispersion mit den Dispersionen der Mischpolymerisate A) bzw. B) mischbar sein. Wässrige Dispersionen der Komponente C) können auch mit den wässrigen Dispersionen der Mischpolymerisate A) oder B) vor deren Trocknung abgemischt werden. Eine weitere Möglichkeit besteht darin die Komponenten A), gegebenenfalls B), und C) in Form deren Schmelzen gemeinsam zu extrudieren und das erstarrte Produkt anschließend zu mahlen.

Die Bindemittelzusammensetzung eignet sich zur Herstellung von Formkörpern aus partikulären Materialien wie Fasermaterialien oder partikulären Materialien aus mineralischen Materialien, Kunststoffen oder Naturstoffen wie Holzspänen, Korkpartikeln, Glaspartikel oder Glaspulver, insbesondere Recyclingglas und Hohlglaskugeln, oder aus Kombinationen dieser Materialien. Die bevorzugte Anwendung ist die als Bindemittel für Fasermaterialien. Als Fasermaterial sind natürliche oder synthetische Rohstoffe geeignet. Beispiele hierfür sind Kunstfasern auf der Basis von faserbildenden Polymeren wie Viskose-, Polyesterwie Polyesterhäckselfasern, Polyamid-, Polypropylen-, Polyethylen-Fasern. Geeignet sind auch Mineralfasern, wie Glasfasern, Keramikfasern, Kohlefasern. Beispiele für natürliche Fasermaterialien sind Holz-, Cellulose-, Woll-, Baumwolle-, Jute-, Flachs-, Hanf-, Kokos-, Ramie- und Sisalfasern. Die Fasern können auch in Form von gewebten Textilien, von Garnen, oder in Form von Nonwovens wie Gelegen oder Gewirken eingesetzt werden. Diese Nonwovens können gegebenenfalls mechanisch vorverfestigt, beispielsweise genadelt, sein.

Je nach Anwendung erfolgt die Herstellung der Formkörper bei Raumtemperatur oder bei erhöhter Temperatur, gegebenenfalls unter erhöhtem Druck. Die Temperatur für die Verfestigung der Formkörper beträgt im allgemeinen von 20°C bis 220°C. Wird bei erhöhter Temperatur gearbeitet, beträgt diese vorzugsweise 90 bis 220°C. Falls die Herstellung der Formkörper unter Druck erfolgt, werden Drucke von 1 bis 200 bar bevorzugt. Die Bindemittelzusammensetzung wird dabei im allgemeinen in einer Menge von 5 bis 50 Gew.-%, bezogen auf das zu bindende Material eingesetzt. Die Bindermenge richtet sich nach dem zu bindenden Substrat und liegt im Falle von Polyesterfasern, Baumwollfasern zwischen 10 und 40 Gew.-%, im Falle von Naturfasern, wie Hanf, Flachs, Sisal, Jute, beispielsweise für Anwendungen im Automobilinnenausbau, vorzugsweise im Bereich von 20 bis 40 Gew.-%. Im Falle von Glas- und Mineralfasern sowie bei anderen mineralischen Materialien, wie Glaskugeln liegt der bevorzugte Bereich zwischen 10 und 30 Gew.-%. Eine weitere Anwendung ist die Herstellung von Holzplatten (HDF und MDF) und Holzextrudaten, wobei die Bindemittelzusammensetzung mit Holzpartikeln gemischt und anschließend extrudiert wird.

Bei der Herstellung von Faser-Formkörpern wird so vorgegangen, dass die pulverförmige Bindemittelzusammensetzung mit den Fasern gemischt wird, die Faser/Pulvermischung nach den üblichen Verfahren der Nonwovenstechnologie, gegebenenfalls nach Kardieren der Faser/Pulvermischung und Nadeln, ausgelegt wird, und durch Temperaturerhöhung, gegebenenfalls unter Anwendung von Druck und/oder Heissdampf gebunden wird. Die Faserbindung kann auch mittels Einstreuen der pulverförmigen Bindemittelzusammensetzung in ein Gewebe, Gelege oder in ein zuvor abgelegtes Faserbett erfolgen (gegebenenfalls nach Kardieren der Faser/Pulvermischung und Nadeln), und das Bindepulver durch Temperaturerhöhung, gegebenenfalls unter zusätzlicher Anwendung von Druck und oder Heissdampf, aufgeschmolzen und gehärtet werden.

Beispiele:

Beispiel 1:

(Herstellung des Polyesters P1)

1500 g 1,4-Cyclohexandimethanol (MG = 144.2 g/mol, 10.4 mol) wurden bei 100°C geschmolzen und in einem 4 1 Dreihalskolben vorgelegt. Danach wurden 1540 g Phthalsäureanhydrid (MG = 148.1 g/mol, 10.4 mol) unter langsamen Rühren in den Kolben gegeben. Die Temperatur wurde auf 100°C erhöht und stieg durch die Reaktionswärme weiter an. Nachdem die erste Reaktion (Ringöffnung des Phthalsäureanhydrids) langsam abgeklungen war, wurde die Temperatur auf 180°C erhöht. Bei dieser Temperatur wurde das entstandene Reaktionswasser über einen Zeitraum von 3 bis 6 Stunden durch Vakuumdestillation entfernt. Die Veresterung wurde durch Zugabe von Katalysatoren (p-TosOH, Übergangsmetallionen, $Ti^{3+}$) in üblicher Weise beschleunigt. Um das Reaktionswasser besser zu entfernen, wurde mehrmals etwas Toluol zugegeben (Azeotrop).

Nach 2 Stunden wurden nochmals 20 g Phthalsäureanhydrid zugegeben, um eine möglichst vollständige Reaktion zu erzielen. Danach wurde das Produkt noch heiß in einen Behälter ausgegossen und anschließend auf Raumtemperatur abgekühlt. Man erhielt einen amorphen Polyester mit einer Glasübergangstemperatur von 51 °C und einem gewichtsmittleren Molekulargewicht Mw von 5400 g $mol^{-1}$, Z-Mittel 8800 g $mol^{-1}$, Zahlenmittel Mn von 830 g $mol^{-1}$.

Beispiel 2:

(Herstellung des selbstvernetzenden Suspensionspolymerisates S1)

In einem 2 Liter Reaktor wurden 868.7 kg deionisiertes Wasser, 44.7 g 1 %-ige wässrige Kupferacetat-Lösung, 107.4 g 5 %-ige Polyvinylpyrrolidon-Lösung (K-Wert: 90), 13.4 g Methacrylsäure, 4.5 g Dodecylmercaptan, 161.1 g Butylacrylat, 697.9 g Styrol und 22.4 g Glycidylmethacrylat vorgelegt. Der pH-Wert der Mischung wurde auf 4.5 eingestellt. Nach Zugabe der Initiatoren 14.5 g tert.-Butylperoxyneodecanoat (75 %-ige Lösung in Aliphaten), 10.7 g tert.-Butylperoxypivalat (75 %-ige Lösung in Aliphaten) und 8.2 g tert.-Butylperoxy-2-ethylhexanoat wurde unter Rühren auf 55°C erhitzt. Nach 4 Stunden wurde die Reaktionstemperatur auf 70°C erhöht und nach weiteren 4 Stunden auf 90°C. Nach Ende der Reaktion wurde das Restmonomer durch vierstündiges Dampfstrippen bei 60°C entfernt. Anschliessend wurde der Ansatz abgekühlt und die Suspensionspolymerisate mit deionisiertem Wasser gewaschen, abgesaugt und getrocknet. Der K-Wert war 37.

Beispiel 3:

(Herstellung eines selbstvernetzenden Suspensionspolymerisates S1 in Gegenwart des Polyesters P1 = S1(P1))

In einem 2 Liter Reaktor wurden 868.7 kg deionisiertes Wasser, 44.7 g 1 %-ige wässrige Kupferacetat-Lösung, 107.4 g 5 %-ige Polyvinylpyrrolidon-Lösung (K-Wert: 90), 13.4 g Methacrylsäure, 4.5 g Dodecylmercaptan, 161.1 g Butylacrylat, 697.9 g Styrol, 22.4 g Glycidylmethacrylat und 89.5 g Polyester P1 vorgelegt. Der pH-Wert der Mischung wurde auf 4.5 eingestellt. Nach Zugabe der Initiatoren 14.5 g tert.-Butylperoxyneodecanoat (75 %-ige Lösung in Aliphaten), 10.7 g tert.-Butylperoxypivalat (75 %-ige Lösung in Aliphaten) und 8.2 g tert.-Butylperoxy-2-ethylhexanoat wurde unter Rühren auf 55°C erhitzt. Nach 4 Stunden wurde die Reaktionstemperatur auf 70°C erhöht und nach weiteren 4 Stunden auf 90°C. Nach Ende der Reaktion wurde das Restmonomer durch vierstündiges Dampfstrippen bei 60°C entfernt. Anschliessend wurde der Ansatz abgekühlt und die Suspensionspolymerisate mit deionisiertem Wasser gewaschen, abgesaugt und getrocknet.
Der K-Wert war 34.

Beispiel 4:

(Herstellung eines selbstvernetzenden Suspensionspolymerisates S1 in Gegenwart eines unverträglichen Polyesters P2 (Trimelittsäure-2-Hexandecanylester) = S1(P2))

In einem 2 Liter Reaktor wurden 862.6 kg deionisiertes Wasser, 46.8 g 1 %-ige wässrige Kupferacetat-Lösung, 112.4 g 5 %-ige Polyvinylpyrrolidon-Lösung (K-Wert: 90), 14.1 g Methacrylsäure, 4.7 g Dodecylmercaptan, 168.6 g Butylacrylat, 730.6 g Styrol, 23.4 g Glycidylmethacrylat und 46.8 g Polyester P2 (Trimelittsäure-2-Hexandecanylester) vorgelegt. Der pH-Wert der Mischung wurde auf 4.5 eingestellt. Nach Zugabe der Initiatoren 15.2 g tert.-Butyl-peroxyneodecanoat (75 %-ige Lösung in Aliphaten), 11.2 g tert.-Butylperoxypivalat (75 %-ige Lösung in Aliphaten) und 8.6 g tert.-Butylperoxy-2-ethylhexanoat wurde unter Rühren auf 55°C erhitzt. Nach 4 Stunden wurde die Reaktionstemperatur auf 70°C erhöht und nach weiteren 4 Stunden auf 90°C. Nach Ende der Reaktion wurde das Restmonomer durch vierstündiges Dampfstrippen bei 60°C entfernt. Anschliessend wurde der Ansatz abgekühlt und die Suspensionspolymerisate mit deionisiertem Wasser gewaschen, abgesaugt und getrocknet.
Der K-Wert war 32.

Beispiel 5:

(Herstellung eines carboxylfunktionellen Styrol-Butylacrylat-Methacrylsäure-Acrylamid-Mischpolymerisats E1)

In einem Reaktor mit 3 Liter Volumen wurden 838.8 g deionisiertes Wasser und 6.7 g Natriumlaurylsulfat vorgelegt und unter Stickstoff beim Rühren auf 80°C aufgeheizt. Bei dieser Temperatur wurde die Initiatorlösung (6.7 g Kaliumperoxodisulfat und 218.4 g Wasser) in den Reaktor gegeben und aus separaten Behältern wurden innerhalb von 4 Stunden folgende Zusammensetzungen in den Reaktor zudosiert:

    Monomerdosierung 1 mit 67.3 g Methacrylsäure, 403.7 g Butylacrylat, 861.3 g Styrol und 6.7 g Dodecylmercaptan.
    Monomerdosierung 2 mit 67.3 g Wasser, 44.9 g einer 30 %-igen, wässrigen Acrylamid-Lösung.
    Sowie eine Initiatordosierung mit 217.6 g Wasser und 6.7 g Kaliumperoxodisulfat.
    Nach den Dosierungen wurde ca. 2 Stunden bei 80°C nachpolymerisiert und mit Hilfe von Ammoniak auf einen pH-Wert von 8 eingestellt.
    Ein rieselfähiges Pulver mit einer Korngröße von ca. 30 μm (Volumenmittel) erhielt man durch Sprühtrocknung.

Beispiel 6:

(Herstellung eines Emulsionspolymerisates E1 mit Polyester P1 = E1(P1))

In einem 16 Liter Reaktor wurden 3.57 kg deionisiertes Wasser, 92.9 g Natriumlaurylsulfat und 387.0 g 40 %-ige tert.-Butylhydroperoxidlösung vorgelegt und unter Rühren 1.1 kg aus der Monomerdosierung 1 und 224 g aus der Monomerdosierung 2 dazugegeben. Bei Erreichen des Temperaturgleichgewichts von 80°C wurde die Initiatordosierung gestartet. Initiatordosierung: 3.43 kg deionisiertes Wasser und 38.7 g Natriumformaldehydsulfoxylat
Die Monomerdosierungen 1 und 2 wurden 15 Minuten nach Reaktionsbeginn eingefahren.
Monomerdosierung 1: 1.94 kg Butylacrylat, 5.26 kg Styrol und 387.0 g Polyester P1
Monomerdosierung 2: 774.1 g deionisiertes Wasser, 129.0 g 30 %-ige wässrige Acrylamidlösung, 133.5 g 50 %-ige wässrige 2-Acrylamido-2-methylpropansulfonsäure, 77.4 g Acrylsäure, 348.3 g Methacrylsäure, 46.4 g 12.5 %-ige wässrige Ammoniaklösung, 92.9 g Natriumlaurylsulfat
Der pH-Wert wurde während der Reaktion auf 4 bis 4.5 eingestellt. Nach Ende der vierstündigen Monomerdosierung ließ man die Initiatordosierung noch eine Stunde nachlaufen und stellte den pH-Wert mit 12.5 %-iger Ammoniaklösung auf 7.5 ein.
Der Festgehalt war 49.8 %, die Viskosität 4500 mPas und der K-Wert 30.
Ein rieselfähiges Pulver mit einer Korngröße von ca. 30 μm (Volumenmittel) erhielt man durch Sprühtrocknung.

Beispiel 7:

(Herstellung einer vernetzbaren Pulvermischung E1+V1 mit dem Emulsionspolymerisat E1 aus Beispiel 5)

Das Emulsionspolymerisat E1 aus Beispiel 5 wurde mit 10 Gew.-% Triglycidylisocyanurat (V1) und 0.6 Gew.-% Triphenylethylphosphoniumbromid vermischt.

Beispiel 8:

(Herstellung einer vernetzbaren Pulvermischung E1(P1)+V1 mit dem modifizierten Emulsionspolymerisat E1(P1) aus Beispiel 6)

Das Emulsionspolymerisat E1(P1) aus Beispiel 6 wurde mit 10 Gew.-% Triglycidylisocyanurat (V1) und 0.6 Gew.-% Triphenylethylphosphoniumbromid vermischt.

Beispiel 9:

(Herstellung einer mit Komponente C) vernetzbaren Pulvermischung (E1+V1) mit dem Emulsionspolymerisat E1 aus Beispiel 5) 90 Gew.-Teile des Emulsionspolymerisats E1 und 10 Gew.-Teile des jeweiligen Additives C) (Tabelle 1) wurden miteinander vermischt. Anschließend wurden 10 Gew.-% Triglycidylisocyanurat (V1) und 0.6 Gew.-% Triphenylethylphosphoniumbromid dazugegeben.

Prüfmethoden:

Schnelltest auf Faserhaftung:

50.0 g des in Tabelle 1 angegebenen Fasermaterials wurden in eine PE-Tüte (700 mm x 350 mm, 10 1 Volumen) eingewogen. Auf das Fasermaterial wurden 50 g der in Tabelle 1 angegebenen Bindemittelzusammensetzung aufgestreut. Die PE-Tüte wurde anschließend mit Pressluft bis 10 cm unter den oberen Rand aufgeblasen und verschlossen. Dann wurde die Tüte von Hand 1 Minute kräftig geschüttelt.
Zur Auswertung wurde das Fasermaterial mit dem daran haftenden Pulver vorsichtig aus der Tüte entnommen und gewogen. Der Prozentsatz des anhaftenden Pulvers, bezogen auf das Gewicht des Fasermaterials, wurde mit folgender Gleichung ermittelt:

Faserhaftung (Gew.-%) =

[Gewicht (Faser + anhaftendes Pulver) / Gewicht (eingesetzte Faser)] x 100

Folgende Additive C) wurden getestet:

PVAC = Polyvinylacetat, Festharz B1,5 (Wacker Polymer Systems)
HCO = Flocken von hydriertem Ricinusöl,
PVOH = Polyvinylalkohol (Hydrolysegrad = 64 %),
PES = Polyester P1
PA = Polyamid Schätti Fix 5000
PET = Polyether Polyethylenglykol 2000
PVB = Polyvinylbutyral, LL4140 (Wacker Polymer Systems)

Die Ergebnisse sind in Tabelle 1 zusammengefasst:

Tabelle 1:

| Faser | E1+V1 | E1+V1+ PVAC | E1+V1+ HCO | E1+V1+ PVOH | E1+V1+ PES | E1+V1+ PA | E1+V1+ PET | E1+V1+ PVB |
|---|---|---|---|---|---|---|---|---|
| Hanf | 67 | 90 | 80 | 93 | 81 | 75 | 74 | 85 |
| Hanfschäben | 75 | 93 | 86 | 95 | 85 | 82 | 80 | 90 |
| Kenaf | 60 | 78 | 70 | 82 | 72 | 67 | 69 | 76 |
| Flachs | 55 | 84 | 65 | 85 | 68 | 60 | 62 | 78 |
| Polyester | 70 | 94 | 90 | 96 | 88 | 82 | 79 | 92 |
| Baumwolle | 75 | 98 | 94 | 99 | 92 | 80 | 83 | 96 |
| Holzfaser | 77 | 98 | 92 | 99 | 90 | 86 | 82 | 97 |

Die Ergebnisse aus Tabelle 1 zeigen, dass durch Kombination mit der Komponente C) die Faserhaftung eines Klebemittels auf Basis eines carboxylfunktionellen Styrol-Butylacrylat-Methacrylsäure-Acrylamid-Mischpolymerisats E1 (Komponente A) mit einem Triglycidylisocyanurat-Vernetzer V1 (Komponente B) deutlich verbessert wird.

Herstellung der Faserformkörper zur Testung:

Zur Herstellung von Pressplatten wurden 115 g Reissbaumwolle mit 13.2 g Bindepulver vermischt und auf einer Fläche von 24 x 24 cm ausgebreitet. Die Faser/Pulvermischungen wurden sofort anschliessend bei Temperaturen von ca. 180°C 5 min lang verpresst, so dass hart verpresste Platten mit 2 mm Dicke bzw. weiche 10 mm dicke Platten mit einem Flächengewicht von ca. 2200 g/m$^2$ und einem Raumgewicht von ca. 1115 kg/m$^3$ bzw. 223 kg/m$^3$ erhalten wurden.

Testmethoden zur Prüfung:

Höchstzugkraft HZK:

Aus den verpressten faserigen Formkörpern wurden Prüfkörper (Abmessungen: 10 mm x 100 mm ) herausgestanzt und bei Raumtemperatur auf einer Zwick-Zugprüfmaschine (analog DIN 53857) geprüft.

Wasseraufnahme:

Zur Bestimmung der Wasseraufnahme wurden die Prüfkörper (Abmessung: 50 mm x 20 mm) für 1 h bzw. 24 h in Wasser gelagert und die Gewichtsaufnahme infolge Wasserquellung gravimetrisch bestimmt.

Wärmestandvermögen:

Zur Prüfung hinsichtlich des Wärmestandvermögens wurden 240 mm x 20 mm lange Streifen aus den Prüfkörpern geschnitten. Diese Streifen wurden waagerecht auf einer planen Unterlage fixiert, so daß die Streifen mit einer Länge von 100 mm über den Rand der Unterlage überstanden. Im Falle der harten Formkörper (Plattendicke: 2 mm) wurde ein 40 g-Gewicht angehängt, während die weichen Formkörper (Plattendicke: 10 mm) nur mit einem Gewicht von 10g belastet wurden. Das Wärmestandvermögen wurde durch Messung der Durchbiegung d nach einer einstündigen Lagerung bei T=120°C ermittelt.
Die Testergebnisse sind in den Tabellen 2 und 3 zusammengefasst:

Tabelle 2:

| Prüfung der harten Formkörper (Flächengewicht 2.200 kg/m$^2$, Raumdichte 1.115 kg/m$^2$) | | | |
|---|---|---|---|
| Ansatz-Nr. | HZK | Wärmestand | Wasseraufnahme (1h / 24) |
| | [N] | [mm] | [Gew.-%] |
| E1 + V1 | 920 | 41,0 | 18/28 |
| E1 + P1 + V1 | 935 | 25,0 | 12/22 |
| E1 (P1) + V1 | 945 | 24,0 | 13/20 |
| S1 | 745 | 45,0 | 33/45 |
| S1 (P1) | 821 | 34,0 | 28/29 |
| S1 (P2) | 854 | 31,0 | 25/28 |

Tabelle 3:

| Prüfung der weichen Formkörper (Flächengewicht 2.200 kg/m$^2$, Raumdichte 223 kg/m$^2$) | | | |
|---|---|---|---|
| Ansatz-Nr. | HZK | Wärmestand | Wasseraufnahme (1h/24h) |
| | [N] | [mm] | [Gew.-%] |
| E1 + V1 | 12,0 | 49,0 | 422/431 |
| E1 + P1 + V1 | 13,2 | 22,0 | 394/410 |
| E1 (P1) + V1 | 13,1 | 20,0 | 356 / 376 |
| S1 | 10,1 | 55,0 | 502/544 |
| S1 (P1) | 11,5 | 35,0 | 448/471 |
| S1 (P2) | 12,3 | 30,0 | 435/444 |

Die Ergebnisse zeigen, dass bei der Faserbindung mit einer Bindemittelkombination aus carboxylfunktionellen Styrol-Butylacrylat-Methacrylsäure-Acrylamid-Mischpolymerisats E1 (Komponente A) mit einem Triglycidylisocyanurat-Vernetzer V1 (Komponente B) durch Zugabe des Polyesters P1 nachträglich (E1+P1) oder während der Polymerisation (E1(P1)) die mechanische Festigkeit verbessert wird, und die Wärmestandfestigkeit drastisch zunimmt. Die analoge Tendenz erhält man beim Einsatz eines selbstvernetzenden, epoxid- und carboxylfunktionellen Styrol-Butylacrylat-Methacrylsäure-Glycidylmethacrylat-Suspensionspolymerisats S1 als Komponente A), welches in Kombination mit einem Polyester P1 oder P2 als Komponente C) eingesetzt wurde.

Bestimmung der Schmelzviskosität:

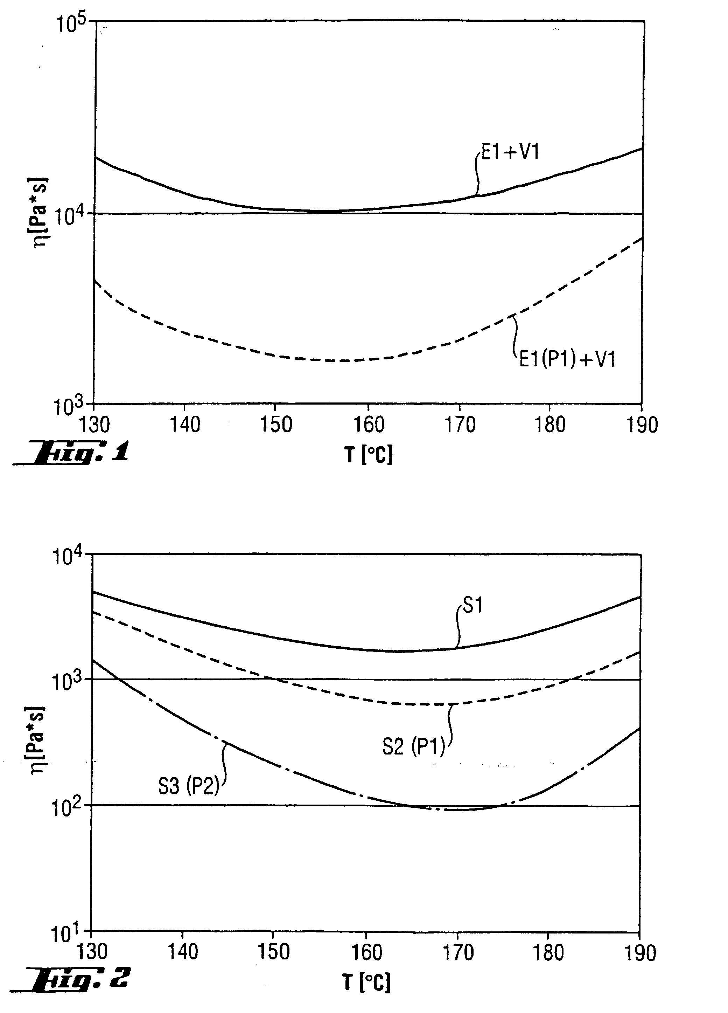

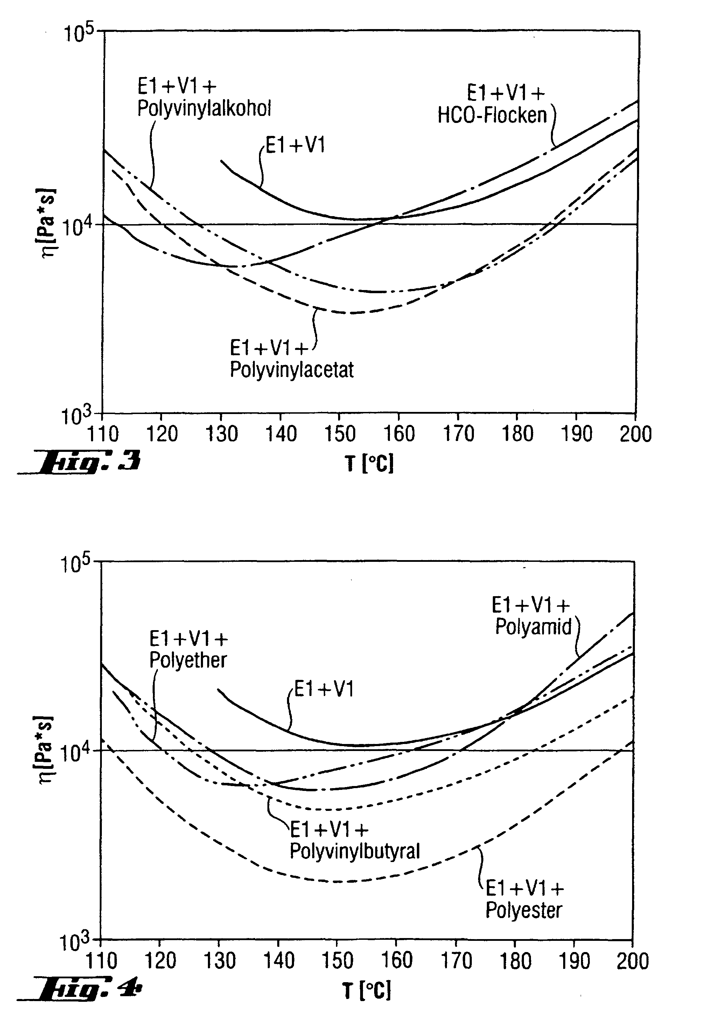

Zur Bestimmung der Schmelzviskosität wurden die Produkte aus Beispiel 8 (Figur 1), den Beispielen 2, 3 und 4 (Figur 2), Beispiel 7 (Figur 1, 3 und 4) und Beispiel 9 (Figur 3 und 4) mittels einem Rheometer der Fa. Bohlin vermessen und die Rheologiekurven (Figur 1 bis 4) aufgenommen.
Messprotokoll der Rheologiekurven:
Temperaturbereich 110°C bis 200°C, Spaltabstand 500 μm, Frequenz 1 Hz, Def 0.05, Temperaturrampe 5°C/min, Oszillierende Messung.
Die Korrelation zwischen Verbesserung der Klebekraft der erfindungsgemäßen Bindemittel-Zusammensetzung mit der Reduzierung der Schmelzviskosität geht aus den Abbildungen Figur 1 bis 4 hervor:
Figur 1 und Figur 2 zeigen, dass durch Copolymerisation der Komponente A) in Gegenwart der Komponente C) die Viskosität der Schmelze der Bindemittelzusammensetzung drastisch abnimmt. Aus Figur 3 und Figur 4 geht hervor, dass dieser Effekt auch durch nachträgliche Zugabe der Komponente B) erreicht werden kann.

**Patentansprüche**

**1.**    Verwenhung einer Pulverförmigen Bindemittelzusammensetzung zur Bindung von partikulären Materialien, welche

A) 10 bis 99.99 Gewichtsteile mindestens eines pulverförmigen Mischpolymerisats enthält, mit einer Glasübergangstemperatur Tg oder einer Schmelztemperatur von ≥ 30°C, aus einem oder mehreren Comonomeren a1) aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht der Comonomere, eines oder mehrerer ethylenisch ungesättigter funktioneller Comonomere a2), und
B) 0 bis 89.99 Gewichtsteile mindestens einer pulverförmigen Verbindung enthält, welche mindestens zwei funktionelle Gruppen tragen, welche mit den funktionellen Gruppen des Mischpolymerisats A) eine kovalente Bindung eingehen können,
**dadurch gekennzeichnet, dass**
C) 0.01 bis 90 Gewichtsteile eines Polymerisats aus der Gruppe umfassend Polyester, Polyamide, Polyether, Polyolefine, Polyvinylalkohole, Polyvinylester, Polyvinylacetale, Fettalkohole und deren Ester, Fettsäuren sowie deren Ester und Amide und Metallseifen, Montansäuren sowie deren Ester und Seifen, Paraffine, jeweils mit einer Glasübergangstemperatur Tg oder einer Schmelztemperatur von ≤ 150°C, enthalten sind, wobei sich die Angaben in Gewichtsteilen auf 100 Gewichtsteile aufaddieren.

**2.** Verwendung, gemäß Anspruch 1, **dadurch gekennzeichnet, dass** die Schmelzviskosität der pulverförmigen Bindemittelzusammensetzung < 5·$10^4$ Pas bei 150°C beträgt.

**3.** Verwendung gemäß Anspruch 1 oder 2, **dadurch gekennzeichnet, dass** als Komponente C) eine Verbindung aus der Gruppe umfassend Polyester von di-oder trifunktionellen aliphatischen oder cycloaliphatischen Alkoholen und einer zweibasischen Carbonsäure mit einem Mw von 2000 bis 300000, Polyvinylalkohole und Ethylen-Vinylalkohol-Copolymerisate mit einem Hydrolysegrad von jeweils 20 bis 100 Mol-% und einem Mw von jeweils 3000 bis 500000, Polyvinylacetat und Ethylen-Vinylacetat-Copolymere mit einem Mw von jeweils 5000 bis 3000000, Polyvinylacetacetal und Polyvinylbutyral mit einem Mw von jeweils 10000 bis 500000, und Fettsäureester enthalten sind.

**4.** Verwendung nach Anspruch 1 bis 3, **dadurch gekennzeichnet, dass** die funktionellen Comonomere a2) solche sind, mit einer oder mehreren funktionellen Gruppen aus der Reihe umfassend Carboxylgruppe, Hydroxygruppe, Aminogruppe, Amidogruppe insbesondere N-Alkylolamidgruppen und sich davon ableitende Gruppen, Carbonylgruppe, Alkoxysilangruppe, Epoxidgruppe, Isocyanatgruppe, Oxazolingruppe, Aziridingruppe, sowie Kombinationen der genannten funktionellen Comonomere

**5.** Verwendung nach Anspruch 1 bis 4, **dadurch gekennzeichnet, dass** als Komponente B) 0.1 bis 50 Gewichtsteile pulverförmige Verbindungen, welche zwei oder mehr Epoxid- oder Isocyanatgruppen aufweisen, mit einem Schmelzpunkt von 40°C bis 150°C, enthalten sind.

**6.** Verwendung nach Anspruch 1 bis 4, **dadurch gekennzeichnet, dass** als Komponente B) Mischpolymerisate von einem oder mehreren Monomeren b1) aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, mit funktionellen Gruppen b2), welche mit den funktionellen Gruppen des Mischpolymerisats A) eine kovalente Bindung eingehen können, enthalten sind.

**7.** Verwendung nach Anspruch 1 bis 6 zur Herstellung von Formkörpern aus partikulären Materialien.

**8.** Verwendung nach Anspruch 7 zur Herstellung von Formkörpern aus partikulären Materialien aus mineralischen Materialien, Kunststoffen oder Naturstoffen.

**9.** Verwendung nach Anspruch 7 als Bindemittel für Fasermaterialien aus natürlichen oder synthetischen Rohstoffen.

**Claims**

**1.** Use of a pulverulent composition for binding particulate materials, which

A) comprises 10 to 99.99 parts by weight of at least one pulverulent interpolymer having a glass transition temperature Tg or a melting temperature of ≥30°C and containing units derived from one or more comonomers a1) selected from the group consisting of vinyl esters of branched or unbranched alkylcarboxylic acids of 1 to 18 carbon atoms, acrylic esters or methacrylic esters of branched or unbranched alcohols of 1 to 15 carbon atoms, dienes, olefins, vinyl aromatics and vinyl halides, and from 0.1 to 50% by weight, based on the total weight of the comonomers, of one or more ethylenically unsaturated functional comonomers a2) and
B) comprises 0 to 89.99 parts by weight of at least one pulverulent compound which bear two or more functional groups capable of entering into a covalent bond with the functional groups of said interpolymer A)
**characterized by** the inclusion of
C) 0.01 to 90 parts by weight of an addition polymer from the group of polyesters, polyamides, polyethers, polyolefins, polyvinyl alcohols, polyvinyl esters, polyvinyl acetals, fatty alcohols and their esters, fatty acids and their esters and amides and metal soaps, montan acids and their esters and soaps, paraffins, each having a glass transition temperature Tg or a melting temperature of ≤150°C, the parts by weight summing to 100 parts by weight.

**2.** Use according to Claim 1, **characterized in that** the pulverulent binder composition has a melt viscosity of $\leq 5 \cdot 10^4$ Pas at 150°C for the liquid composition.

**3.** Use according to Claim 1 or 2, **characterized in that** said component C) is a compound selected from the group consisting of polyesters of di- or trifunctional aliphatic or cycloaliphatic alcohols and a dibasic carboxylic acid having an Mw of 2000 to 300 000, polyvinyl alcohols and ethylene-vinyl alcohol copolymers having a degree of hydrolysis of in each case 20 to 100 mol% and an Mw of in each case 3000 to 500 000, polyvinyl acetate and ethylene-vinyl acetate copolymers having an Mw of in each case 5000 to 3 000 000, polyvinyl acetoacetal and polyvinyl butyral having an Mw of in each case 10 000 to 500 000, and fatty acid esters.

**4.** Use according to of Claims 1 to 3, **characterized in that** said functional comonomers a2) are comonomers having one or more functional groups selected from the group consisting of carboxyl group, hydroxyl group, amino group, amido group, especially N-alkylolamide groups and groups derived therefrom, carbonyl group, alkoxysilane group, epoxy group, isocyanate group, oxazoline group, aziridine group and also combinations of the functional comonomers mentioned.

**5.** Use according to Claims 1 to 4, **characterized in that** said component B) is 0.1 to 50 parts by weight of pulverulent compounds having two or more epoxy or isocyanate groups and a melting point of 40°C to 150°C.

**6.** Use according to Claims 1 to 4, **characterized in that** said component B) is constituted by interpolymers of one or more monomers b1) selected from the group consisting of vinyl esters of branched or unbranched alkylcarboxylic acids of 1 to 18 carbon atoms, acrylic esters or methacrylic esters of branched or unbranched alcohols of 1 to 15 carbon atoms, dienes, olefins, vinyl aromatics and vinyl halides with functional groups b2) capable of entering a covalent bond with said functional groups of said interpolymer A).

**7.** Use according to Claims 1 to 6 for producing mouldings from particulate materials.

**8.** Use according to Claim 7, **characterized in that** said particulate materials are composed of mineral materials, artificial materials or natural materials.

**9.** Use according to Claim 7, as a binder for fibrous materials composed of natural or synthetic raw materials.


**Revendications**

**1.** Utilisation d'une composition de liant sous forme de poudre comme liant pour des matériaux sous forme de particules, qui contient

A) 10 à 99,99 parties en poids d'au moins un copolymère sous forme de poudre, présentant une température de transition vitreuse Tg ou une température de fusion $\geq$ 30°C, obtenu à partir d'un ou de plusieurs comonomères a1) du groupe comprenant les esters vinyliques d'acides alkylcarboxyliques non ramifiés ou ramifiés comprenant 1 à 18 atomes de carbone, les esters de l'acide acrylique ou méthacrylique d'alcools ramifiés ou non ramifiés comprenant 1 à 15 atomes de carbone, les diènes, les oléfines, les aromatiques de vinyle et les halogénures de vinyle et de 0,1 à 50% en poids, par rapport au poids total des comonomères, d'un ou de plusieurs comonomères fonctionnels éthyléniquement insaturés a2) et
B) 0 à 89,99 parties en poids d'au moins un composé sous forme de poudre qui porte au moins deux groupes fonctionnels, qui peuvent former une liaison covalente avec les groupes fonctionnels du copolymère A), **caractérisée en ce que** sont contenues
C) 0,01 à 90 parties en poids d'un polymère du groupe comprenant les polyesters, les polyamides, les polyéthers, les polyoléfines, les poly(alcools vinyliques), les poly(esters de vinyle), les polyvinylacétals, les alcools gras et leurs esters, les acides gras ainsi que leurs esters, amides et savons métalliques, les acides montaniques ainsi que leurs esters et savons, les paraffines, présentant à chaque fois une température de transition vitreuse Tg ou une température de fusion $\leq$ 150°C, les indications en parties en poids s'additionnant en formant 100 parties en poids.

**2.** Utilisation selon la revendication 1, **caractérisée en ce que** la viscosité de la masse fondue de la composition de liant sous forme de poudre est de $5 \cdot 10^4$ Pa.s à 150°C.

3. Utilisation selon la revendication 1 ou 2, **caractérisée en ce qu'**est contenu comme composant C) un composé du groupe comprenant les polyesters d'alcools aliphatiques ou cycloaliphatiques, difonctionnels ou trifonctionnels et d'un acide carboxylique dibasique présentant un Mw de 2000 à 300 000, les poly(alcools vinyliques) et les copolymères d'éthylène et d'alcool vinylique présentant un degré d'hydrolyse à chaque fois de 20 à 100% en mole et un Mw à chaque fois de 3000 à 500 000, le poly(acétate de vinyle) et les copolymères d'éthylène et d'acétate de vinyle présentant un Mw. à chaque fois de 5000 à 3 000 000, le polyvinylacétacétal et le polyvinylbutyral présentant un Mw à chaque fois de 10 000 à 500 000, et les esters d'acide gras.

4. Utilisation selon la revendication 1 à 3, **caractérisée en ce que** les comonomères fonctionnels a2) sont ceux présentant un ou plusieurs groupes fonctionnels de la série comprenant le groupe carboxyle, le groupe hydroxy, le groupe amino, le groupe amido, en particulier les groupes N-alkylolamide et les groupes qui en sont dérivés, le groupe carbonyle, le groupe alcoxysilane, le groupe époxyde, le groupe isocyanate, le groupe oxazoline, le groupe aziridine, ainsi que les combinaisons des comonomères fonctionnels mentionnés.

5. Utilisation selon la revendication 1 à 4, **caractérisée en ce que** sont contenues comme composant B) 0,1 à 50 parties en poids de composés sous forme de poudre, qui présentent un ou plusieurs groupes époxyde ou isocyanate, avec un point de fusion de 40°C à 150°C.

6. Utilisation selon la revendication 1 à 4, **caractérisée en ce que** sont contenus, comme composants B), des copolymères d'un ou de plusieurs monomères b1) du groupe comprenant les esters vinyliques d'acides alkylcarboxyliques non ramifiés ou ramifiés comprenant 1 à 18 atomes de carbone, les esters de l'acide acrylique ou méthacrylique d'alcools ramifiés ou non ramifiés comprenant 1 à 15 atomes de carbone, les diènes, les oléfines, les aromatiques de vinyle et les halogénures de vinyle, avec des groupes fonctionnels b2), qui peuvent former une liaison covalente avec les groupes fonctionnels ou copolymère A).

7. Utilisation selon la revendication 1 à 6 pour la préparation de corps moulés à partir de matériaux sous forme de particules.

8. Utilisation selon la revendication 7 pour la préparation de corps moulés à partir de matériaux sous forme de particules constitués de matériaux minéraux, de matériaux synthétiques ou de substances naturelles.

9. Utilisation selon la revendication 7 comme liant pour des matériaux fibreux constitués de matières premières naturelles ou synthétiques.

**Fig. 1**

**Fig. 2**

**Fig. 3**

**Fig. 4**